# EUROPEAN PATENT SPECIFICATION

(11) **EP 2 551 944 B1**
(45) Date of publication and mention of the grant of the patent: **30.10.2013**
(21) Application number: 12177521.7
(22) Date of filing: 23.07.2012
(51) Int. Cl.: H01M 4/36, H01M 4/56, H01M 4/57

(54) **Lead-acid battery**
Bleisäurebatterie
Batterie au plomb-acide

(30) Priority: 25.07.2011 JP 2011161756
(43) Date of publication of application: 30.01.2013
(73) Proprietor: GS Yuasa International Ltd., Kyoto-shi, Kyoto 601-8520 (JP)
(72) Inventor: FUNATO, Takayuki, Kyoto, 601-8520 (JP); OKADA, Yuichi, Kyoto, 601-8520 (JP)
(74) Representative: Vossius & Partner

(56) References cited:
- EP-A1- 2 343 757
- JP-A- 10 188 963
- US-A1- 2011 027 653

## Description

This invention relates to an active material of a lead-acid battery.

The inventor has examined how charge-discharge cycle life is influenced by including a tin compound in a positive active material of a valve regulated lead-acid battery. As a result, it has been found that
- life performance is defined by corrosion of a positive electrode grid when a tin compound is not included in a positive active material; and
- when a tin compound is included in an amount of 1% by mass on a metal tin basis, corrosion of a positive electrode grid can be prevented, but there arises a new degradation mode in which a negative active material shrinks in a thickness direction. In this case, life performance in a cycle charge-discharge life test is defined by shrinkage of a negative active material. It has been already known that a negative active material shrinks along a direction parallel to the surface of a negative electrode plate and the surface of the negative active material is cracked. However, it has not been reported yet that a negative active material shrinks in a thickness direction. Dropout and the like of an active material could not be detected, and the bulk density of a negative active material increased with shrinkage of the negative active material. According to a charge-discharge model of a lead-acid battery, the pore volume decreases and charge-discharge with a heavy current becomes difficult when the bulk density of a negative active material increases.

Now, related prior art documents will be presented. JP H10-188963 A discloses that inclusion of a tin compound in a positive active material of a valve regulated lead-acid battery increases the discharge capacity of the storage battery. JP 3185508 B discloses inclusion of carbon black in a negative active material in a valve regulated lead-acid battery in which the total theoretical capacity of a negative active material is lower than the total theoretical capacity of a positive active material. Patent Document 2 indicates that owing to carbon black, a charge reaction of a negative electrode occurs in preference to a reductive reaction of oxygen, and electrical conductivity around lead sulfate in an active material is improved, so that charge-discharge cycle life increases. However, none of the patent documents describes the problem that a negative active material shrinks in a thickness direction.

A basic object of this invention is to provide a lead-acid battery, the cycle life performance of which is improved by preventing shrinkage of a negative active material in a thickness direction in a charge-discharge cycle.

This invention is a lead-acid battery which includes a positive electrode plate including a positive electrode grid and a positive active material filled in the positive electrode grid and formed in advance, a negative electrode plate including a negative electrode grid and a negative active material filled in the negative electrode grid and formed in advance, and an electrolyte solution,
wherein the positive active material contains a tin compound in an amount of 0.5% by mass to 3.0% by mass (inclusive) on a metal tin basis, and
the negative active material contains carbon black in an amount of 0.4% by mass to 2.0% by mass (inclusive).

Preferably, the lead-acid battery is a valve regulated lead-acid battery in which a compressive force is applied between the positive electrode plate and the negative electrode plate. In the valve regulated lead-acid battery, a separator such as a retainer mat is provided between the positive electrode plate and the negative electrode plate. In the valve regulated lead-acid battery, shrinkage of the negative active material is suppressed owing to a compressive force applied to the negative electrode plate, so that cycle life performance is further improved.

The amount of active material can be measured by separating the active material from the electrode plate, washing out an electrolyte solution by rinsing and drying the active material. Tin is added in the form of, for example, tin sulfate (SnSO₄), but its added form is arbitrary, such as stannic hydroxide (Sn(OH)₄) and tin carbonate (SnCO₃). Hereinbelow, the content of a tin compound will be shown as a value on a metal tin basis. Carbon black is, for example, acetylene black, but may be other carbon black such as ketjen black and oil-furnace black.

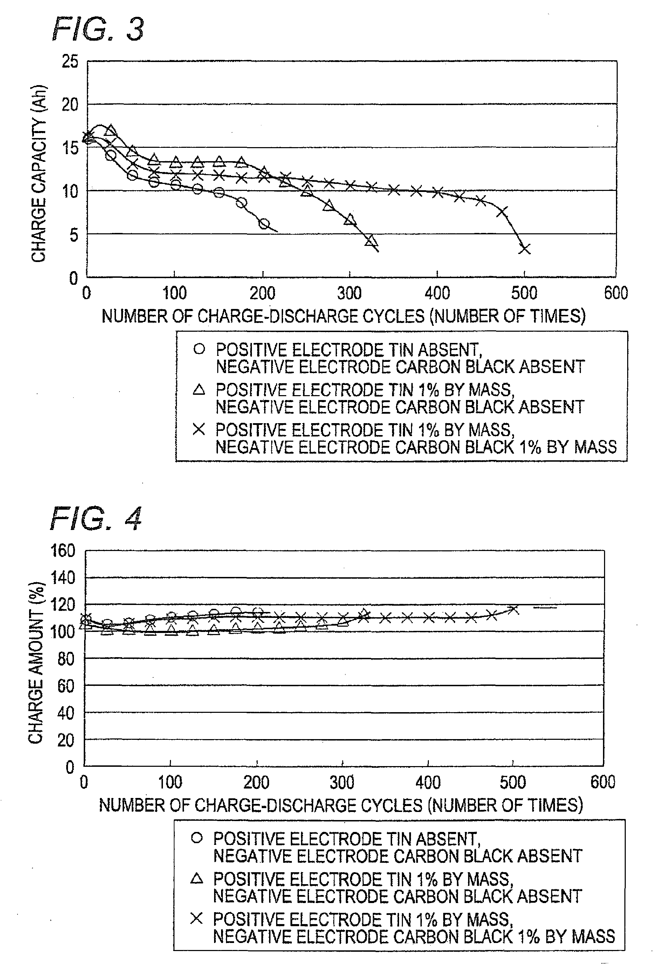

If a charge-discharge cycle life test is carried out using a positive active material containing no tin compound and a negative active material containing no carbon black, life is defined by corrosion of a positive electrode grid in the case of a valve regulated lead-acid battery. Here, if a tin compound is included in the positive active material, corrosion of the positive electrode grid no longer occurs and charge-discharge cycle life performance is improved, but there arises a phenomenon in which the negative active material shrinks in a thickness direction. Thus, if for example 1.0% by mass of tin compound is included in the positive active material and for example 1.0% by mass of carbon black is included in the negative active material, shrinkage of the negative active material can be prevented to improve charge-discharge cycle life performance (Fig. 3 and Table 3). The effect of carbon black is to prevent the negative active material from shrinking in a thickness direction (Table 1), and only slightly affects a charge amount in the charge-discharge cycle test (Fig. 4). Therefore, carbon black does not improve charge acceptability, but improves charge-discharge cycle life performance by preventing shrinkage of the negative active material. If a tin compound is included in a positive active material of a liquid type lead-acid battery, shrinkage of a negative active material also occurs, and therefore inclusion of carbon black in the negative active material is effective.

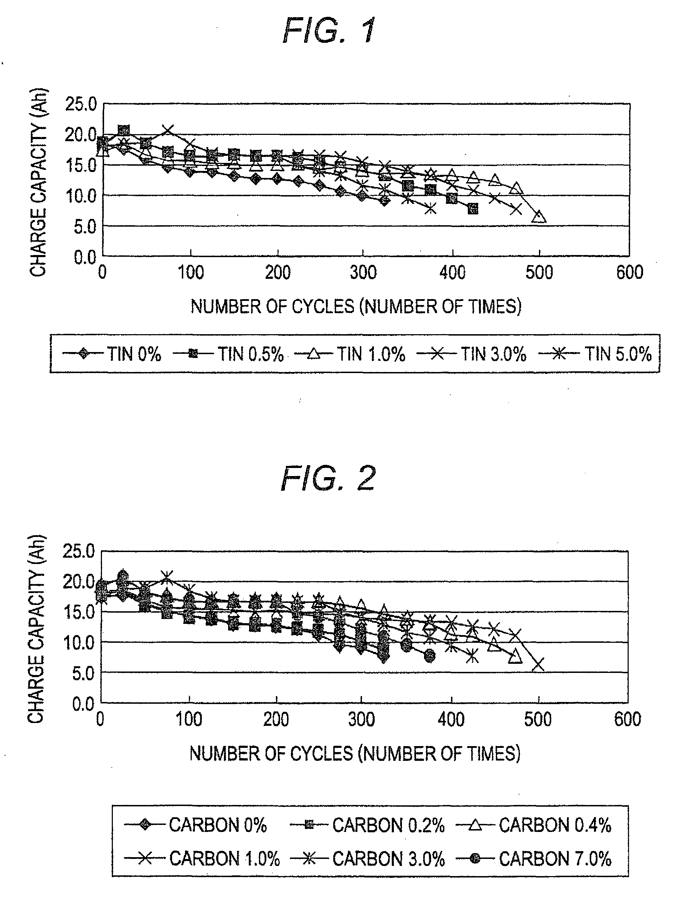

If the content of carbon black in the negative active material is fixed to 1.0% by mass and the content of a tin compound in the positive active material is changed, charge-discharge cycle life increases when the content of the tin compound is 0.5% by mass to 5.0% by mass (inclusive), and an especially high effect is obtained when the content of the tin compound is 0.5% by mass to 3.0% by mass (inclusive) (Fig. 1 and Table 3). On the other hand, if the content of the tin compound in the positive active material is fixed to 1.0% by mass and the content of carbon black in the negative active material is changed, charge-discharge cycle life increases when the content of carbon black is 0.4% by mass to 7.0% by mass (inclusive), and an especially high effect is obtained when the content of carbon black is 0.4% by mass to 3.0% by mass (inclusive) (Fig. 2 and Table 3). In this invention, carbon black is included in a negative active material in an amount of 0.4% by mass to 2.0% by mass (inclusive) to thereby solve the new problem that a negative active material shrinks in a thickness direction if a charge-discharge cycle is experienced using a positive active material containing a tin compound.

The foregoing and other features of the invention will become apparent to one skilled in the art to which the present invention relates upon consideration of the invention with reference to the accompanying drawings, wherein:
Fig. 1 is a characteristic diagram showing a course of a discharge capacity in a charge-discharge cycle life test when the content of carbon black in a negative active material is fixed to 1.0% by mass and the content of a tin compound in a positive active material is changed, with the charge-discharge cycle conditions of discharge current: 0.25 CA, final voltage: 1.75 V, discharge voltage: 2.25 V, maximum current: 0.2 CA and charge time: 10 hours;
Fig. 2 is a characteristic diagram showing a course of a discharge capacity in a charge-discharge cycle life test when the content of a tin compound in a positive active material is fixed to 1.0% by mass and the content of carbon black in a negative active material is changed, with the charge-discharge cycle conditions of discharge current: 0.25 CA, final voltage: 1.75 V, discharge voltage: 2.25 V, maximum current: 0.2 CA and charge time: 10 hours;
Fig. 3 is a characteristic diagram showing a course of a discharge capacity in a charge-discharge cycle life test in three combinations of a positive active material containing no tin compound and a negative active material containing no carbon black, a positive active material containing 1.0% by mass of tin compound and a negative active material containing no carbon black, and a positive active material containing 1.0% by mass of tin compound and a negative active material containing 1.0% by mass of carbon black, with the charge-discharge cycle conditions of discharge current: 0.25 CA, final voltage: 1.75 V, discharge voltage: 2.25 V, maximum current: 0.2 CA and charge time: 10 hours;
Fig. 4 is a characteristic diagram showing a course of a charge amount in a charge-discharge cycle life test in each sample in Fig. 3, wherein a ratio of the charge amount is shown where the discharge amount at each time in the charge-discharge life test is 100;
Fig. 5 is a sectional view schematically showing a negative electrode plate before shrinkage;
Fig. 6 is a sectional view schematically showing a negative electrode plate after shrinkage;
Fig. 7 is a characteristic diagram showing effects on cycle life performance of the content of carbon black in a negative active material and the content of a tin compound in a positive active material, wherein the type of a storage battery is a valve regulated type; and
Fig. 8 is a characteristic diagram showing effects on cycle life performance of the content of carbon black in a negative active material and the content of a tin compound in a positive active material, wherein the type of a storage battery is a liquid type.

Preferred embodiments of the present invention will be described hereinafter. Hereinbelow, an optimum example of the invention of the present application will be shown. The example can be appropriately modified in accordance with common knowledge of a person skilled in the art and disclosures of prior arts when carrying out the invention of this application.

### Example

An alloy sheet having 0.08% by mass of calcium, 1.0% by mass of tin and lead as a balance was expanded to prepare a positive electrode grid. A powder containing 100% by mass of lead powder and a tin compound in an amount of 0 to 5.0% by mass on a metal tin basis was kneaded with water and dilute sulfuric acid to form a paste, and the paste was filled in the positive electrode grid, cured at 30°C and a relative humidity of 70% for 24 hours and dried at 50°C and a relative humidity of 30% or less for 24 hours to provide an unformed positive electrode plate. Tin was added as stannous sulfate, but the form of tin added is arbitrary. The composition of the positive electrode grid and the lead powder and the method for production thereof are arbitrary, and a component other than a tin compound such as, for example, red lead may be added to the lead powder. It is thought that a most part of the included tin compound remains in a positive active material, and exists as a tin oxide such as SnO or SnO₂ or a salt such as tin sulfate.

An alloy sheet having 0.08% by mass of calcium, 1.0% by mass of tin and lead as a balance was expanded to prepare a negative electrode grid. A powder containing 100% by mass of lead powder, 0 to 7.0% by mass of carbon black, 0.1% by mass of lignin, 0.5% by mass of barium sulfate and 0.1% by mass of polypropylene fibers as a reinforcing agent was kneaded with water and dilute sulfuric acid to form a paste, and the paste was filled in the negative electrode grid, cured at 30°C and a relative humidity of 70% for 24 hours and dried at 50°C and a relative humidity of 30% or less for 24 hours to provide an unformed negative electrode plate. Although acetylene black having an average primary particle diameter of 40 nm was used, carbon black may be ketjen black or oil-furnace black, and it is important to use fine carbon having an average primary particle diameter of less than 1 µm. The composition of the negative electrode grid and the lead powder and the method for production thereof are arbitrary, and a third component other than the above-mentioned component may be added to the lead powder.

Two positive electrode plates were each wrapped with a glass retainer, held by three negative electrode plates, and stored in a container under pressure, a dilute sulfuric acid was added, and container formation was carried out at 2.7 A × 40 hours to provide a single cell valve regulated lead-acid battery. The rated capacity of each lead-acid battery was 20A•hr. For some active material compositions, a battery having a group of cells connected in series was prepared rather than a single cell battery, and a charge-discharge cycle life test was conducted, but as in the case of the example, the negative active material shrank in a thickness direction owing to a tin compound in the positive active material and shrinkage could be prevented by carbon black included in the negative active material.

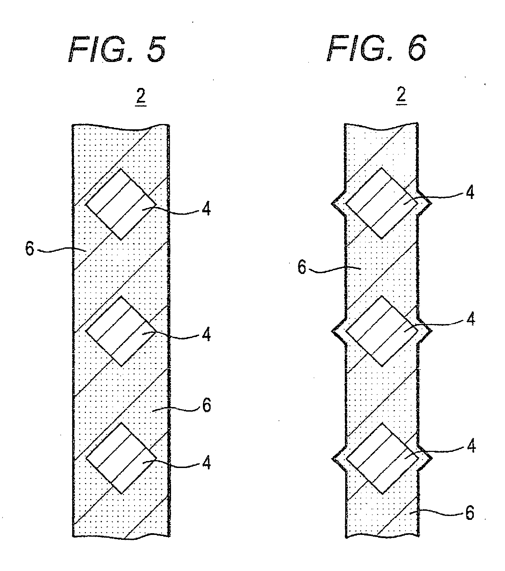

Using three lead-acid batteries for each sample, a cycle charge-discharge life test of repeating a cycle, in which the battery was discharged until the power voltage dropped to 1.75 V at 0.25 CA and then charged for 10 hours at a constant voltage of 2.25 V (maximum current 0.2 CA) in a gas phase, was conducted. A discharge capacity until the power voltage dropped to 1.75 V was measured for each cycle, and a point, at which the discharge capacity decreased to lower than 10A·h, was designated as the end of life, and also a discharge amount at the time of charge at a constant voltage of 2.25 V was measured for each cycle. The result is shown with an average value for three storage batteries. After the end of life was reached, the lead-acid battery was charged at a constant voltage of 2.25 V (maximum current 0.2 CA) for 10 hours, and disassembled to observe the positive electrode plate and the negative electrode plate. Particularly the thickness of the negative active material was measured by a micrometer, the negative active material was separated from the negative electrode plate, and a bulk density was measured after rinsing and drying. The cross section of a normal negative electrode plate is shown in Fig. 5 and the cross section of a negative electrode plate, for which a negative active material shrinks, is shown in Fig. 6 in a schematic manner, wherein reference numeral 2 denotes a negative electrode plate, reference numeral 4 denotes a negative electrode grid and reference numeral 6 denotes a negative active material.

Fig. 1 shows effects of the content of a tin compound in the positive active material when the content of carbon black in the negative active material is fixed to 1.0% by mass. It is seen that charge-discharge cycle life is short when tin is not contained, life becomes maximum when the content of the tin compound is 1.0% by mass, the tin compound in an amount of 0.5% by mass to 5.0% by mass (inclusive) is effective, and the tin compound in an amount of 0.5% by mass to 3.0% by mass (inclusive) is especially preferable.

Fig. 2 shows effects of the content of carbon black in the negative active material when the content of a tin compound in the positive active material is fixed to 1.0% by mass. Charge-discharge cycle life increases by including carbon black, charge-discharge cycle life becomes maximum when the carbon black content is 1.0% by mass, and charge-discharge cycle life decreases when the carbon black content is more than 1.0% by mass. The optimum range of the carbon black content is 0.4% by mass to 3.0% by mass (inclusive).

The thickness of the negative active material after shrinkage is shown in Table 1, and the thickness before shrinkage is same. From data with the carbon black content of 0%, it is seen that the cause of shrinkage is a tin compound in the positive active material. For the negative active material containing 0.2% by mass of carbon black, shrinkage can be prevented by about 1/3, but charge-discharge cycle life is insufficient as shown in Fig. 2. In contrast, if 0.4% by mass of carbon black is included, shrinkage can be prevented by about 3/5, and charge-discharge cycle life is significantly increased. If 1.0% by mass of carbon black is included, shrinkage can be prevented by about 2/3, and charge-discharge cycle life becomes maximum. If the carbon black content is 3.0% by mass or more, shrinkage can be mostly prevented, but carbon black in an amount of more than 3.0% by mass compromises charge-discharge cycle life as shown in Fig. 2.

**[Table 1]**

| Content of tin in positive electrode (%) | Content of carbon in negative electrode (%) | Thickness of negative electrode plate (mm) |
|---|---|---|
| 0 | 0 | 2.00 |
| 0.5 | 0 | 1.90 |
| 1.0 | 0 | 1.80 |
| 3.0 | 0 | 1.75 |
| 5.0 | 0 | 1.70 |
| 1.0 | 0.2 | 1.86 |
| 1.0 | 0.4 | 1.92 |
| 1.0 | 1.0 | 1.93 |
| 1.0 | 3.0 | 1.95 |
| 1.0 | 7.0 | 1.98 |

Since the mass of the negative active material taken out from the grid was basically same as that before shrinkage, shrinkage of the negative active material was not ascribable to dropout and the like. The bulk density of the negative active material increased as shrinkage became significant (Table 2). This indicates that since pores of the negative active material are compressed by shrinkage to cause a reduction in pore volume, and pores are easily blocked by lead sulfate, charge-discharge at a heavy current becomes difficult.

**[Table 2]**

| Content of tin in positive electrode (%) | Content of carbon in negative electrode (%) | Bulk density of negative electrode (g/ml) |
|---|---|---|
| 0 | 0 | 4.06 |
| 0.5 | 0 | 4.27 |
| 1.0 | 0 | 4.51 |
| 3.0 | 0 | 4.64 |
| 5.0 | 0 | 4.78 |
| 1.0 | 0.2 | 4.37 |
| 1.0 | 0.4 | 4.23 |
| 1.0 | 1.0 | 4.21 |
| 1.0 | 3.0 | 4.16 |
| 1.0 | 7.0 | 4.10 |

Table 3 shows how a tin compound in the positive active material and carbon black in the negative active material influence charge-discharge cycle life, including storage batteries other than samples shown in Figs. 1 and 2. Fig. 3 shows a course of a discharge capacity in a charge-discharge cycle life test for a storage battery which contains neither tin in the positive active material nor carbon black in the negative active material. By including a tin compound in the positive active material, life increases while the negative active material starts shrinking in a thickness direction, and therefore a factor determining life changes from corrosion of the positive electrode grid to shrinkage of the negative active material. Inclusion of carbon black in the negative active material in addition to a tin compound in the positive active material leads to the highest life performance. Table 3 shows on the ordinate the content of carbon black in the negative active material in the unit of % by mass and shows on the abscissa the content of a tin compound in the positive active material in the unit of % by mass. Values described in the table each represent the number of charge-discharge life tests up to the end of life. It is seen that life performance is especially improved for the range within the thick-bordered box.

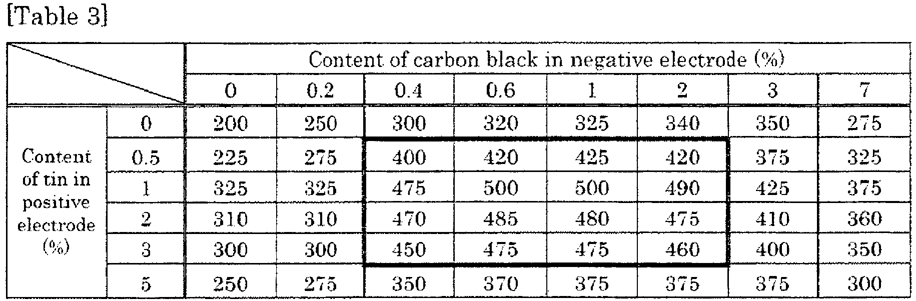

Fig. 4 shows a course of a charge amount in the charge-discharge cycle life test, wherein the charge amount is almost constant during the charge-discharge cycle life test. This indicates that the effect of carbon black is not related to charge acceptability, but is related to prevention of shrinkage of the negative active material.

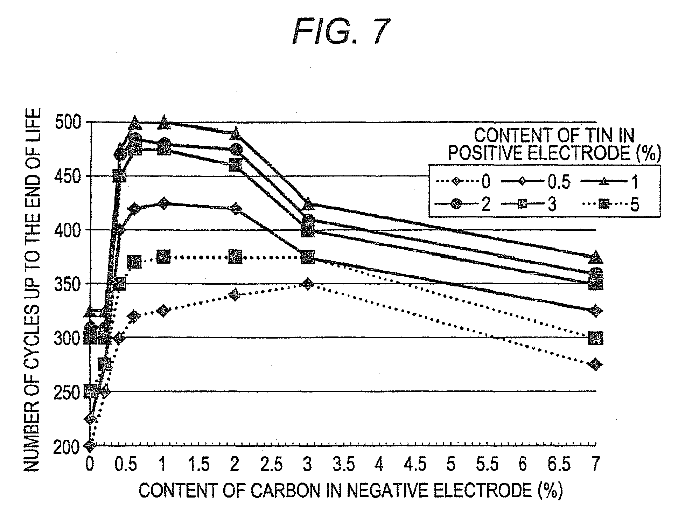

Data in Table 3 are plotted and shown in Fig. 7, wherein the abscissa represents the content of carbon black in the negative active material, and the ordinate represents the number of charge-discharge life tests up to the end of life. It is seen that life performance is significantly improved when the content of carbon black in the positive active material is 0.4% by mass to 2.0% by mass (inclusive) and the content of a tin in the negative active material is 0.5% by mass to 3.0% by mass (inclusive) on a metal basis.

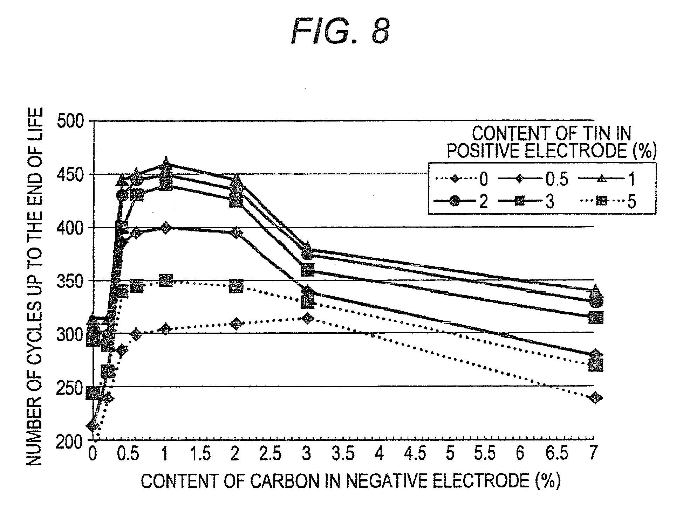

The lead-acid battery in the example is a valve regulated type but the test can be conducted in the same manner with a liquid type lead-acid battery in which an electrolyte solution is left open. In the liquid type lead-acid battery, life performance is also significantly improved when the content of carbon black in the positive active material is 0.4% by mass to 2.0% by mass (inclusive) and the content of a tin in the negative active material is 0.5% by mass to 3.0% by mass (inclusive) on a metal basis. The results for the liquid type lead-acid battery are shown in Table 4 and Fig. 8, and the configuration of the battery is same as that in the example except that a polyethylene separator is used rather than a retainer mat, a compressive force is not applied between the positive electrode plate and the negative electrode plate, and the electrolyte solution is left open to air. Test conditions are same as those in the example. Similar results are obtained for the liquid type lead-acid battery, but the effect is low in comparison with the valve regulated lead-acid battery.

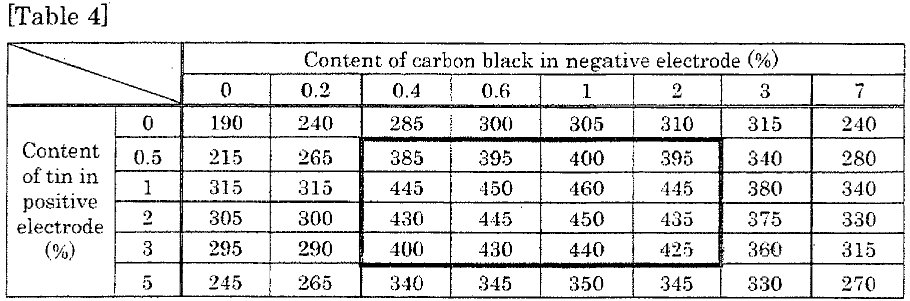

Acetylene black having an average primary particle diameter of 40 nm was used in the example, but the type, the average primary particle diameter and the like of carbon black are arbitrary. For example, with ketjen black (1% by mass) having an average primary particle diameter of 40 nm, shrinkage of the negative active material in a thickness direction could also be prevented, and with acetylene black (1% by mass) having an average primary particle diameter of 100 nm, shrinkage of the negative active material in a thickness direction could also be prevented. A valve regulated lead acid battery is shown in the example, but the lead-acid battery may be a liquid type lead-acid battery. That is, also in the liquid type lead-acid battery, the negative active material shrinks in a thickness direction by a charge-discharge cycle if a tin compound is included in the positive active material, and shrinkage of the negative active material in a thickness direction can be prevented by including carbon black in the negative active material.

## Claims

1. A lead-acid battery which comprises a positive electrode plate including a positive electrode grid and a positive active material filled in the positive electrode grid and formed in advance, a negative electrode plate (2) including a negative electrode grid (4) and a negative active material (6) filled in the negative electrode grid (4) and formed in advance, and an electrolyte solution, **characterized in that**
the positive active material contains a tin compound in an amount of 0.5% by mass to 3.0% by mass (inclusive) on a metal tin basis, and
the negative active material (6) contains carbon black in an amount of 0.4% by mass to 2.0% by mass (inclusive).

2. The lead-acid battery according to claim 1, **characterized in that** the lead-acid battery is a valve regulated lead-acid battery in which a compressive force is applied between the positive electrode plate and the negative electrode plate (2).

## Patentansprüche

1. Bleisäurebatterie mit:
einer positiven Elektrodenplatte, die ein positives Elektrodengitter und ein in das positive Elektrodengitter gefülltes und vorab gebildetes positives aktives Material aufweist;
einer negativen Elektrodenplatte (2), die ein negatives Elektrodengitter (4) und ein in das negative Elektrodengitter (4) gefülltes und vorab gebildetes negatives aktives Material (6) aufweist; und
einer Elektrolytlösung;
**dadurch gekennzeichnet, dass**
das positive aktive Material eine Zinnverbindung in einer Menge von 0,5 Massenprozent bis 3,0 Massenprozent (einschließlich) auf einer metallischen Zinnbasis enthält, und
das negative aktive Material (6) Ruß ("carbon black") in einer Menge von 0,4 Massenprozent bis 2,0 Massenprozent (einschließlich) enthält.

2. Bleisäurebatterie nach Anspruch 1, **dadurch gekennzeichnet, dass** die Bleisäurebatterie eine ventilgesteuerte Bleisäurebatterie ist, in welcher eine Druckkraft zwischen der positiven Elektrodenplatte und der negativen Elektrodenplatte (2) angelegt ist.

## Revendications

1. Batterie d'accumulateur au plomb qui comprend une plaque d'électrode positive incluant une grille d'électrode positive et une matière active positive remplie dans la grille d'électrode positive et formée à l'avance, une plaque d'électrode négative (2) incluant une grille d'électrode négative (4) et une matière active négative (6) remplie dans la grille d'électrode négative (4) et formée à l'avance, et une solution d'électrolyte, **caractérisée en ce que**
la matière active positive contient un composé à base d'étain à hauteur de 0,5 % en poids à 3,0 % en poids (inclus) sur une base d'étain métallique, et
la matière active négative (6) contient du noir de carbone à hauteur de 0,4 % en poids à 2,0 % en poids (inclus).

2. Batterie d'accumulateur au plomb selon la revendication 1, **caractérisée en ce que** la batterie d'accumulateur au plomb est une batterie d'accumulateur au plomb régulée par une soupape dans laquelle une force de compression est appliquée entre la plaque d'électrode positive et la plaque d'électrode négative (2).
